# EUROPEAN PATENT SPECIFICATION

(11) **EP 3 908 007 B1**
(45) Date of publication and mention of the grant of the patent: **05.06.2024**
(21) Application number: 20738942.0
(22) Date of filing: 07.01.2020
(51) Int. Cl.: H04Q 11/00, H04B 10/272

(54) **METHOD, SYSTEM, AND RELATED DEVICE FOR ADMINISTERING AN OPTICAL NETWORK UNIT**
VERFAHREN, SYSTEM UND ZUGEHÖRIGE VORRICHTUNG ZUR VERWALTUNG EINER OPTISCHEN NETZWERKEINHEIT
PROCÉDÉ, SYSTÈME ET DISPOSITIF ASSOCIÉ POUR ADMINISTRER UNE UNITÉ DE RÉSEAU OPTIQUE

(30) Priority: 07.01.2019 CN 201910013162
(43) Date of publication of application: 10.11.2021
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: HU, Xintian, Beijing 100053 (CN); ZHOU, Wenhui, Beijing 100053 (CN); ZHANG, Dechao, Beijing 100053 (CN)
(74) Representative: J A Kemp LLP
(86) International application number: PCT/CN2020/070742
(87) International publication number: WO 2020/143639

(56) References cited:
- EP-A1- 3 154 222
- US-A1- 2014 023 366

## Description

### CROSS-REFERENCE TO RELATED APPLICATION

The present application claims priority to Chinese Patent Application No. 201910013162.1, filed on January 7, 2019.

### TECHNICAL FIELD

The present disclosure relates to the technical field of Passive Optical Networks (PONs), and in particular to methods for Optical Network Unit (ONU) management, a device for ONU management and a computer-readable storage medium.

### BACKGROUND

A PON is a single-fiber bidirectional PON characterized by point-to-multipoint, and includes three components: an Optical Line Terminal (OLT), an ONU, and an Optical Distribution Network (ODN). The OLT achieves the function of an optical fiber line terminal, controls the registration, authentication, and bandwidth allocation of the ONU, and manages the ONU. The ONU is used as a terminal device of the ODN. According to different types and network positions of ONU devices, the ONU devices have different service adaptation functions and provide different types and numbers of User Network Interfaces (UNIs) for users. The ODN defines uplink and downlink transmission directions and the wavelengths used in the PON.

An ONU Management and Control Interface (OMCI) protocol is a management protocol between the OLT and the ONU. The OLT realizes the management control of the ONU through OMCI data interaction. The OMCI protocol allows the OLT to perform ONU connection establishment and release, UNI management, performance statistics, event self-reporting, and other actions, and provides the main management functions of configuration management, fault management, performance management, and security management.

In a current PON system, ONU devices are independently manufactured by various manufacturers. Due to technical differences of various manufacturers, problems of interoperability exist between the ONU device and an OLT, including: firstly, in the ONU device production process, each manufacturer defines a large number of private OMCI Managed Entities (MEs) for convenience of management, the existence of the private MEs makes the ONU device difficult to achieve unified management and control, and the OLT cannot manage the ONU devices of different manufacturers; secondly, the difference of ONU devices caused by different understanding of ME parameters by various manufacturers, thereby making it difficult to realize a unified management and control scheme; and thirdly, the OMCI protocol realizes different functions of layer L2, layer L3, and the above layers through mutual combination and association of the MEs in the ONU device. The ME combination and association modes of the ONU devices of different manufacturers are different due to the difference of the ONU devices of different manufacturers, the OLT needs to adapt to various ME combination and association modes, and the complexity of management and control is increased.

US2014023366A1 provides a DPOE system service auto-configuration method, including: - the DPOE system acquires a configuration file from a back-office management system, the configuration file includes configuration information of an optical network unit (ONU) and configuration information of an optical line terminal (OLT) in the DPOE system; - the DPOE system analyzes the acquired configuration file, and obtains the configuration information of the ONU and the configuration information of the OLT; and - the DPOE system configures the OLT locally and configures the ONU via a management channel between the OLT and the ONU.

### SUMMARY

The present invention is set out in the appended set of claims.

Embodiments of the present disclosure provide methods for ONU management, a device for ONU management, an OLT and a computer-readable storage medium.

In order to achieve the above object, the technical solutions of the embodiments of the present disclosure are implemented as follows.

In a first aspect, the embodiments of the present disclosure provide a method for ONU management according to claim 1 and further detailed in the dependent claims referring back to this claim.

In a second aspect, the embodiments of the present disclosure also provide a device for ONU management according to claim 7 and further detailed in the dependent claims referring back to this claim.

In a third aspect, the embodiments of the present disclosure also provide a computer-readable storage medium according to claim 13.

The embodiments of the present disclosure provide methods for ONU management, a device for ONU management, an OLT and a computer-readable storage medium. The method includes: a first command and a second command are generated when an ONU is determined to be online, where the second command carries a first specified identifier that is used to identify the ONU; the first command is sent to an OLT via a first interface, where the first command is used for parameter configuration of the OLT; and a first management message is generated according to the second command, and the first management message is sent to the ONU via a second interface, where the first management message is sent to the ONU via the OLT, and the first management message carries the first specified identifier. By adopting the technical solutions of the embodiments of the present disclosure, unified management of different ONUs is realized through an ONU management device, the configuration of an OLT is specifically realized via a first interface, the transformation of the OLT is reduced, and management of different ONUs is realized via a second interface, so that the problem of interoperability between the ONUs and the OLT caused by technical differences of various manufacturers is solved, and the complexity of management and control is greatly reduced.

### BRIEF DESCRIPTION OF THE DRAWINGS

FIG. 1 is a first flowchart of a method for ONU management according to an embodiment of the present disclosure.
FIG. 2 is a second flowchart of a method for ONU management according to an embodiment of the present disclosure.
FIG. 3 is a third flowchart of a method for ONU management according to an embodiment of the present disclosure.
FIG. 4 is a schematic structural diagram of a device for ONU management according to an embodiment of the present disclosure.
FIG. 5 is another schematic structural diagram of a device for ONU management according to an embodiment of the present disclosure.
FIG. 6 is a hardware structural diagram of a device according to an embodiment of the present disclosure.
FIG. 7 is a schematic structural diagram of a system for ONU management according to an embodiment of the present disclosure.

### DETAILED DESCRIPTION

The present disclosure will be further described in detail below with reference to the accompanying drawings and specific embodiments.

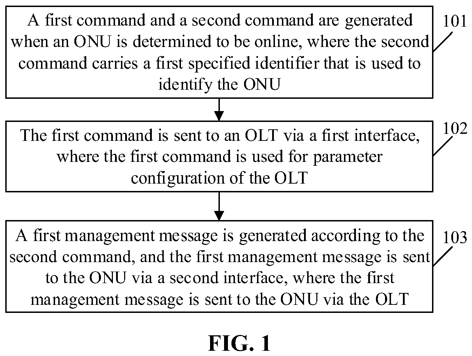

The embodiments of the present disclosure provide a method for ONU management. FIG. 1 is a first flowchart of a method for ONU management according to an embodiment of the present disclosure. As illustrated in FIG. 1, the method includes the following steps.

In 101, a first command and a second command are generated when an optical network unit (ONU) is determined to be online. The second command carries a first specified identifier that is used to identify the ONU.

In 102, the first command is sent to an optical line terminal (OLT) via a first interface. The first command is used for parameter configuration of the OLT.

In 103, a first management message is generated according to the second command, and the first management message is sent to the ONU via a second interface. The first management message is sent to the ONU via the OLT, and the first management message carries the first specified identifier.

The method for ONU management according to the present embodiment is applied to an ONU management device, which may also be called a virtual device layer. The ONU management device is configured to realize unified management of different ONUs. As an implementation, the ONU management device may be composed of at least one logic unit. In practice, the ONU management device may be implemented by a separate server or by a separate logic module in an existing server.

In the present embodiment, the ONU management device at least has a first interface and a second interface. The first interface is used for managing the OLT, mainly including OLT parameter configuration, establishment of an OMCI channel with the ONU, etc. The second interface is used for managing the ONU device, mainly relating to configuration, query, alarm setting, etc. of various MEs of the ONU device.

In an optional embodiment of the present disclosure, the ONU is determined to be online by performing the following actions. An ONU presence notification sent by the OLT is obtained via the first interface. The ONU presence notification includes an OLT identifier, an ONU identifier, and ONU positioning information. The ONU is determined to be online based on the ONU presence notification.

The OLT identifier is used for representing an OLT device. As an example, the OLT identifier may be represented by an IP address of the OLT. The ONU identifier is used for representing an ONU device, and the ONU identifier may be represented by parameters such as a Series Number (SN), a password, and a Media Access Control (MAC) address. The ONU positioning information (that is, the channel termination information to which the ONU is connected) is used for establishing a channel with an ONU device, and the ONU positioning information may be represented by information such as board card information, port information, and ONU numbers.

In the present embodiment, after the OLT device finds that the ONU device is online, the OLT device reports an ONU presence notification to the ONU management device via the first interface. The ONU management device parses the ONU presence notification to obtain an OLT identifier, an ONU identifier, and ONU positioning information carried in the ONU presence notification. In practice, the OLT device may discover that the ONU device is online based on PON layer messages such as Physical Layer OAM (PLOAM) messages and embedded Operation Administration and Maintenance (OAM) messages.

In an optional embodiment of the present disclosure, the method further includes the following operation. A first specified identifier is generated according to the OLT identifier, the ONU identifier, and the ONU positioning information.

In the present embodiment, the first specified identifier is a specific identifier for an ONU. The first specified identifier corresponds to a unique ONU; on the other hand, the first specified identifier also corresponds to an OLT connected with the ONU. Different ONU devices correspond to different specified identifiers (referred to herein as first specified identifier). The ONU management device generates a unique specified identifier corresponding to the ONU according to the OLT identifier, the ONU identifier, and the ONU positioning information, so that the OLT and ONU management devices can be identified and analyzed.

As an example, a data channel is established between an ONU m and an OLT x via a port s of an OLT board card b. When the ONU management device knows that a message sent to the ONU m needs to pass via the port s of the OLT board card b, the OLT identifier x, the board card b, the port s, and the ONU identifier m are linearly combined to obtain an identifier z = xbsm, and the identifier z = xbsm serves as a first specified identifier of the ONU m. m may include information such as an SN, Password, MAC address (or IP address) of the ONU.

In an optional embodiment of the present disclosure, the step of generating the first command and the second command includes the following operation. The first command and the second command are generated according to the ONU presence notification. The second command carries the first specified identifier.

In the present embodiment, after the ONU management device obtains an ONU presence notification, in order to finish the ONU online, subsequent operation commands are respectively mapped into a first command for the OLT and a second command for the ONU device according to actions and operation parameters required to be executed for the ONU device online. The second command carries the first specified identifier.

In the present embodiment, the first command carries related parameters for parameter configuration of the OLT. The parameters include interface configuration parameters used for establishing a communication channel (i.e., OMCI channel) with the ONU device and providing an interface for managing the ONU device.

In an optional embodiment of the present disclosure, the step of generating the first management message according to the second command includes the following operations. At least one first management message for the first specified identifier corresponding to the second command is obtained. The at least one first management message is encapsulated using a protocol for the second interface. The at least one first management message carries the first specified identifier.

In the present embodiment, the second command carries the first specified identifier and is used for managing a specified ONU device of a specified OLT. The ONU management device may configure corresponding management messages for different commands in advance. It will be appreciated that after obtaining a second command, at least one first management message corresponding to the second command is obtained. The at least one first management message is sent via a second interface and is mainly used for various ME configuration, query, alarm setting, etc. in the ONU device.

For example, a series of management messages such as synchronization code acquisition, Management Information Base (MIB) data resetting, updating, and ONU configuration issuing are generated according to an ONU online command. As another example, a series of management messages such as software download, software activation, and software confirmation are generated according to a software upgrade command.

In the present embodiment, the management message (i.e., the first management message) includes a basic format and an extended format.

For the basic format, the management message adopts fixed 48 bytes, among which the message content occupies 32 bytes. A message header includes 4 fields: a transaction-related identifier, a message type, a basic type/extended type option, and an entity identifier (ID). A message tail is added with Cyclic Redundancy Check (CRC) information.

For the extended format, the management message adopts a maximum of 1980 bytes, among which the message content occupies 1966 bytes. A message header includes five fields: a transaction-related identifier, a message type, a basic type/extended type option, an entity ID, and a message length. A message tail is added with CRC information.

The message type includes three fields including whether a response flag is needed, whether it is a response message, and the message type. The message type includes a create type, a delete type, a set type, or a get type, etc.

In the present embodiment, the operation that at least one first management message is encapsulated using the protocol for the second interface includes that: the at least one generated first management message is encapsulated according to a protocol suitable for the second interface, and the first specified identifier is added to the encapsulated message.

In the present embodiment, the first interface and the second interface are different interfaces based on different protocol specifications. For example, the first interface uses a Simple Network Management Protocol (SNMP) and follows the existing parameters and management interfaces of the SNMP to realize the management of the OLT so as to reduce the transformation of the OLT. The second interface uses a standardized Google Remote Procedure Call (GRPC) protocol to achieve unified management of different ONUs to solve the problem of interoperability.

In an optional embodiment of the present disclosure, the method further includes the following steps. A first execution result corresponding to the first command is obtained, and a second execution result corresponding to the first management message is obtained. The first execution result is from the OLT and indicates an execution result after the OLT executes parameter configuration. The second execution result is from the ONU. The second execution result is sent by the ONU, and reaches the ONU management device via the OLT. The second execution result indicates an execution result of the ONU on the first management message.

In the present embodiment, after the ONU management device sends the first command and the first management message, the OLT and the ONU need to feed back a response message (i.e., feed back an execution result) so as to ensure that the command is executed correctly.

The first execution result is reported to the ONU management device via the first interface after the OLT completes local parameter configuration and the establishment of the OMCI channel with the ONU.

After the first management message is sent to the ONU via the OLT, the ONU parses the first management message and sends response information to the OLT, and after the OLT detects the response information, the second execution result is sent to the ONU management device via the second interface.

In an optional embodiment of the present disclosure, the method further includes the following steps. An ONU operation command is obtained. The ONU operation command carries a second specified identifier. A third command carrying the second specified identifier is generated according to the ONU operation command. A second management message is generated according to the third command. The second management message is sent to the ONU corresponding to the second specified identifier via the second interface. The second management message is sent to the ONU corresponding to the second specified identifier via the OLT. The second management message carries the second specified identifier.

In the present embodiment, the ONU operation command is from a management and control device. The management and control device sends the ONU operation command to the ONU management device via a standard interface. The ONU management device parses the ONU operation command. For example, a Network Element Management System (EMS) network management device may communicate with the ONU management device based on a Simple Network Management Protocol (SNMP), and a Software Defined Network (SDN) controller may communicate with the ONU management device based on a Netconf/Yang protocol. The ONU operation command at least includes: identification information such as an OLT identifier and an ONU identifier. The ONU operation command may further include actions and corresponding operation parameters. The actions include a configuration action and/or a query action. The operation parameters include connection state operation parameters and/or interface name operation parameters, etc.

After receiving an ONU operation command from the management and control device, the ONU management device maps the ONU operation command into an command for the ONU device through actions and operation parameters carried in the ONU operation command. The mapped command still contains the second specified identifier.

The ONU operation command may be used to indicate the configuration of configuration parameters for a service, query for an operating state of a device, etc. The ONU operation command carries a second specified identifier corresponding to an ONU. The second specified identifier has the same meaning as the aforementioned first specified identifier. Descriptions thereof are omitted herein.

In the present embodiment, after receiving the ONU operation command, the ONU management device generates a second management message according to the ONU operation command. As an example, the ONU management device may configure corresponding management messages for different commands in advance. It will be appreciated that after obtaining an ONU operation command, a second management message corresponding to the ONU operation command is obtained.

In an optional embodiment of the present disclosure, the method further includes the following steps. A third execution result corresponding to the second management message is obtained. The third execution result comes from the ONU. The third execution result is sent from the ONU to the ONU management device via the OLT. The third execution result indicates an execution result of the ONU on the second management message. The third execution result is sent to the network management device.

The embodiments of the present disclosure also provide a method for ONU management, which is applied to an OLT. The method includes the following steps. The OLT receives a first command, performs parameter configuration according to the first command, and establishes a communication channel with an ONU device. A first management message is received. The first management message is sent to an ONU device corresponding to a first specified identifier carried in the first management message based on the communication channel.

In an optional embodiment of the present disclosure, the method further includes the following steps. The ONU is determined to be online, and an ONU presence notification is sent to an ONU management device. The ONU presence notification includes an OLT identifier, an ONU identifier, and ONU positioning information. The OLT sends the ONU presence notification to the ONU management device via a first interface of the ONU management device. As an example, the OLT identifier may be represented by an IP address of the OLT. The ONU identifier is used for representing the OLT device. The ONU identifier may be represented by parameters such as an SN, a password, and an MAC address. The ONU positioning information is used for establishing a channel with the ONU device, and the ONU positioning information may be represented by information such as board card information, port information, and ONU numbers.

In the present embodiment, the first command is used for the OLT to perform parameter configuration. Based on the description of the previous embodiment, the first command is generated by the ONU management device based on the ONU presence notification. The first command carries related parameters for parameter configuration of the OLT. The parameters include interface configuration parameters used for establishing a communication channel (i.e., an OMCI channel) with the ONU device and providing an interface for managing the ONU device.

In the present embodiment, based on the description of the previous embodiment, the first management message is generated by the ONU management device according to the second command generated based on the OLT identifier, the ONU identifier, and the ONU positioning information carried in the ONU presence notification, and is mainly used for configuration, query, alarm setting, etc. of various MEs in the ONU device.

In an optional embodiment of the present disclosure, the method further includes the following steps. The OLT receives a second management message and sends the second management message to an ONU device corresponding to a second specified identifier carried in the second management message.

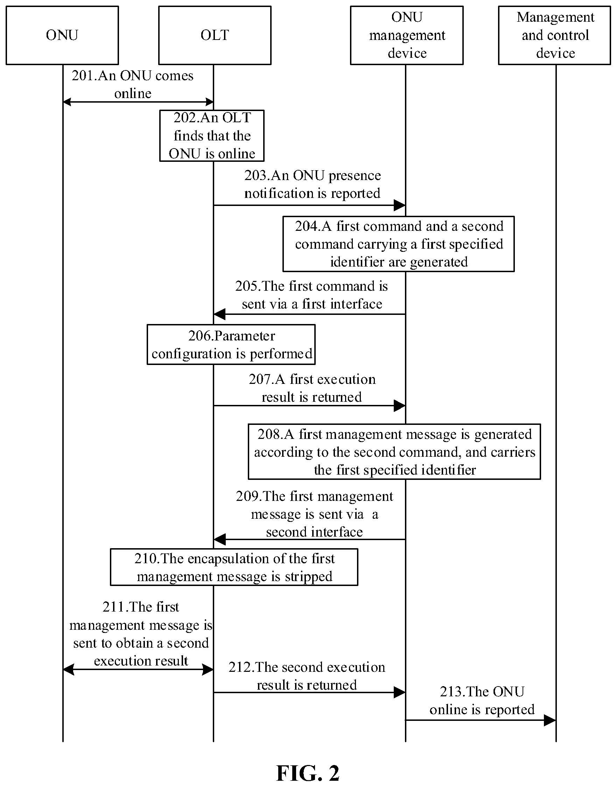

The embodiments of the present disclosure also provide a method for ONU management. FIG. 2 is a second flowchart of a method for ONU management according to an embodiment of the present disclosure. The present embodiment is illustrated by taking an ONU online scene as an example. As illustrated in FIG. 2, the method includes the following steps.

In 201 to 202, an ONU comes online, and an OLT finds that the ONU is online.

Here, an OLT device may find that an ONU device is online based on a PON layer message such as a PLOAM message and an embedded OAM message to obtain an OLT identifier, an ONU identifier, and ONU positioning information. The OLT identifier is used for representing the OLT device. As an example, the OLT identifier may be represented by an IP address of the OLT. The ONU identifier is used for representing an ONU device. The ONU identifier may be represented by parameters such as an SN, a Password, and an MAC address. The ONU positioning information is used for establishing a channel with the ONU device, and the ONU positioning information may be represented by information such as board card information, port information, and ONU numbers.

In 203, the OLT reports an ONU presence notification to an ONU management device. The ONU presence notification includes the OLT identifier, the ONU identifier, and the ONU positioning information.

In the present embodiment, the ONU management device performs legality authentication on the ONU presence notification. As an example, the ONU management device compares the information such as the SN and the MAC address carried in the ONU presence notification with information in its own database. If the comparison is consistent, validity authentication is confirmed (i.e., validity authentication is passed), and a first command and a second command are generated according to the ONU presence notification. If the comparison is inconsistent, no operation is performed, or indication information that the authentication fails is sent to the ONU.

In 204, the ONU management device generates a first command and a second command carrying a first specified identifier according to the ONU presence notification.

Here, the ONU management device generates a first specified identifier according to the OLT identifier, the ONU identifier, and the ONU positioning information. The generation method of the first specified identifier may be described with reference to the above-mentioned embodiment, and descriptions thereof are omitted herein.

In 205, the ONU management device sends a first command to the OLT via a first interface.

In 206, the OLT performs parameter configuration based on the first command.

In 207, the OLT sends a first execution result to the ONU management device.

In 208, the ONU management device generates a first management message according to the second command. The first management message carries a first specified identifier.

In 209 to 211, the ONU management device sends the first management message to the OLT via a second interface. The OLT strips the encapsulation of the first management message, sends the first management message to the ONU, and obtains a second execution result returned by the ONU.

In 212, the OLT sends the second execution result to the ONU management device.

In 213, the ONU management device reports to a management and control device that the ONU is online.

Here, after receiving the second execution result, the ONU management device reports to the management and control device that the ONU is online, and the management and control device starts to manage and control the OLT and the online ONU.

The detailed description of the steps in the present embodiment may be made with reference to the foregoing embodiments, and will be omitted herein.

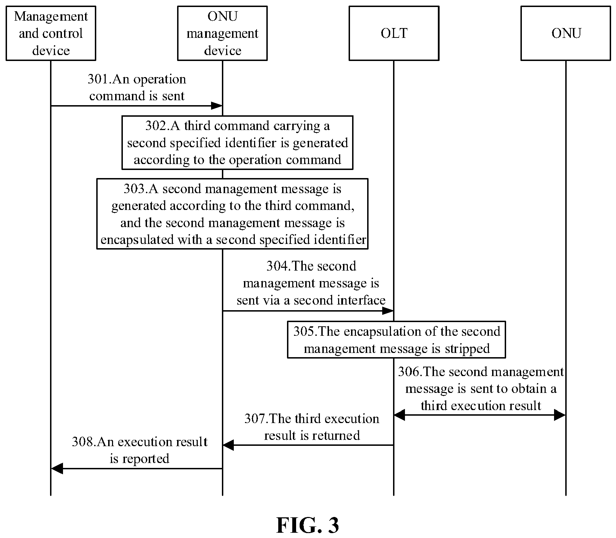

The embodiments of the present disclosure also provide a method for ONU management. FIG. 3 is a third flowchart of a method for ONU management according to an embodiment of the present disclosure. The embodiment is illustrated by taking a scenario where the management and control device sends the operation command as an example. As illustrated in FIG. 3, the method includes the following steps.

In 301, a management and control device sends an operation command to an ONU management device.

In 302 to 303, the ONU management device generates a third command carrying a second specified identifier according to the operation command, generates a second management message according to the third command, and encapsulates the second management message with the second specified identifier.

In 304 to 306, the ONU management device sends the second management message to an OLT via a second interface. The OLT strips the encapsulation of the second management message, sends the second management message to an ONU, and obtains a third execution result.

In 307 to 308, the OLT sends the third execution result to the ONU management device, and the ONU management device reports an execution result to the management and control device.

The detailed description of the steps in the present embodiment may be made with reference to the foregoing embodiments, and will be omitted herein.

By adopting the technical solutions of the embodiments of the present disclosure, unified management of different ONUs is realized through an ONU management device, the configuration of an OLT is specifically realized via a first interface, the transformation of the OLT is reduced, and management of different ONUs is realized via a second interface, so that the problem of interoperability between the ONUs and the OLT caused by technical differences of various manufacturers is solved, and the complexity of management and control is greatly reduced.

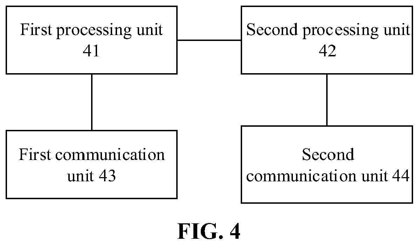

The embodiments of the present disclosure also provide a device for ONU management. FIG. 4 is a schematic structural diagram of a device for ONU management according to an embodiment of the present disclosure. As illustrated in FIG. 4, the device includes: a first processing unit 41, a second processing unit 42, a first communication unit 43, and a second communication unit 44.

The first processing unit 41 is configured to generate a first command and a second command when an ONU is determined to be online, where the second command carries a first specified identifier that is used to identify the ONU.

The second processing unit 42 is configured to generate a first management message according to the second command, where the first management message carries the first specified identifier.

The first communication unit 43 is configured to send the first command generated by the first processing unit 41 to an OLT via a first interface, where the first command is used for parameter configuration of the OLT.

The second communication unit 44 is configured to send the first management message generated by the second processing unit 42 to the ONU via a second interface, where the first management message is sent to the ONU via the OLT.

In the embodiments of the present disclosure, the first processing unit 41 has an OLT management function, generates a first command and a second command, and communicates with the OLT through the first communication unit 43 via the first interface, i.e. sends the first command to the OLT via the first interface. The second processing unit 42 is mainly responsible for generating a management message for managing the ONU, sending the first management message to the OLT through the second communication unit 44 via a second interface, and sending the first management message to the ONU via the OLT.

In an optional embodiment of the present disclosure, the first processing unit 41 is configured to obtain an ONU presence notification from the OLT through the first communication unit 42 via the first interface, and determine that the ONU is online based on the ONU presence notification. The ONU presence notification includes an OLT identifier, an ONU identifier, and ONU positioning information.

In an optional embodiment of the present disclosure, the first processing unit 41 is further configured to generate a first specified identifier according to the OLT identifier, the ONU identifier, and the ONU positioning information.

In an optional embodiment of the present disclosure, the first processing unit 41 is configured to generate a first command and a second command according to the ONU presence notification. The second command carries the first specified identifier.

In an optional embodiment of the present disclosure, the second processing unit 42 is configured to obtain at least one first management message for the first specified identifier corresponding to the second command, and encapsulate the at least one first management message according to a protocol for the second interface. The at least one first management message carries the first specified identifier.

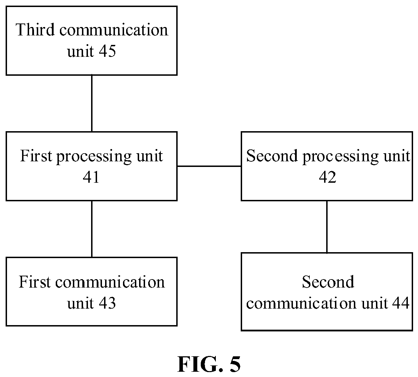

In an optional embodiment of the present disclosure, as illustrated in FIG. 5, the device further includes: a third communication unit 45, configured to obtain an ONU operation command. The ONU operation command carries a second specified identifier.

The first processing unit 41 is further configured to generate a third command carrying the second specified identifier according to the ONU operation command.

The second processing unit 42 is further configured to generate a second management message according to the third command. The second management message carries the second specified identifier.

The second communication unit 44 is further configured to send the second management message generated by the second processing unit 42 to an ONU corresponding to the second specified identifier via the second interface. The second management message is sent to the ONU corresponding to the second specified identifier via the OLT.

In the embodiments of the present disclosure, the first processing unit 41 and the second processing unit 42 in the device may be implemented by a Central Processing Unit (CPU), a Digital Signal Processor (DSP), a Microcontroller Unit (MCU) or a Field-Programmable Gate Array (FPGA) in the device in practice. The first communication unit 43, the second communication unit 44, and the third communication unit 45 in the device may be implemented by a communication module (including: basic communication suites, operating systems, communication modules, standardized interfaces and protocols, etc.) and a transceiver antenna in practice.

It should be noted that the ONU management device provided in the above-mentioned embodiment is only exemplified by the division of the above-mentioned program modules when performing ONU management. In practice, the above-mentioned processing can be allocated to different program modules as required, i.e., the internal structure of the device is divided into different program modules to complete all or part of the above-described processing. In addition, the ONU management device provided by the above-mentioned embodiment and the embodiment of the ONU management method belong to the same concept, and the detailed implementation process thereof is detailed in the method embodiment and will be omitted herein.

The present disclosure also provides an OLT which is present for illustration purposes only. The OLT includes: a fourth communication unit, a configuration unit, and a fifth communication unit.

The fourth communication unit is configured to receive a first command and a first management message.

The configuration unit is configured to perform parameter configuration according to the first command, and establish a communication channel with an ONU device.

The fifth communication unit is configured to send the first management message to an ONU device corresponding to a first specified identifier carried in the first management message through the communication channel established by the configuration unit.

In the embodiments of the present disclosure, the configuration unit in the OLT may be implemented by a CPU, a DSP, an MCU or an FPGA in the OLT in practice. The fourth communication unit and the fifth communication unit in the OLT may be implemented by a communication module (including: basic communication suites, operating systems, communication modules, standardized interfaces and protocols, etc.) and a transceiver antenna in practice.

It should be noted that the OLT provided in the above-mentioned embodiment is only exemplified by the division of the above-mentioned program modules when performing ONU management. In practice, the above-mentioned processing can be allocated to different program modules as required, i.e., the internal structure of the OLT is divided into different program modules to complete all or part of the above-described processing. In addition, the OLT provided by the above-mentioned embodiment and the embodiment of the ONU management method belong to the same concept, and the detailed implementation process thereof is detailed in the method embodiment and will be omitted herein.

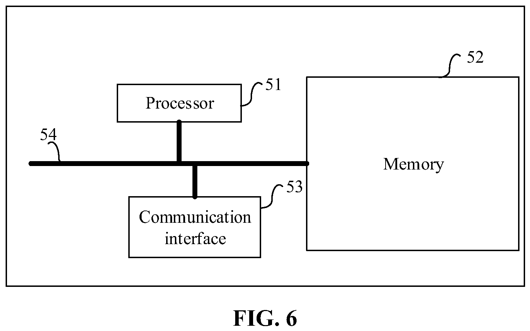

The embodiments of the present disclosure also provide a device. FIG. 6 is a hardware structural diagram of a device according to an embodiment of the present disclosure. As illustrated in FIG. 6, the device includes a memory 52, a processor 51, and a computer program that is stored on the memory 52 and runnable on the processor 51.

Optionally, the device may be embodied as an ONU management device of the embodiments of the present disclosure, and the device may implement corresponding processes implemented by the ONU management device in the methods of the embodiments of the present disclosure. The descriptions thereof are omitted herein for the sake of brevity.

Optionally, the device may be embodied as an OLT of the embodiments of the present disclosure, and the device may implement corresponding processes implemented by the OLT in the methods of. The descriptions thereof are omitted herein for the sake of brevity.

It will be appreciated that a plurality of communication interfaces 53, including at least a first interface and a second interface, are also included in the device. The various components in the device may be coupled together by a bus system 54. It will be appreciated that the bus system 54 is configured to implement connection and communication between the components. In addition to a data bus, the bus system 54 also includes a power bus, a control bus, and a status signal bus. However, for the sake of clarity, various buses are marked as the bus system 54 in FIG. 6.

It will be appreciated that the memory 52 may be a volatile memory or a non-volatile memory, or may include both volatile and non-volatile memories. The non-volatile memory may be a Read Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disk, or a Compact Disc-ROM (CD-ROM). The magnetic surface memory may be a magnetic disk memory or a magnetic tape memory. The volatile memory may be a RAM, which is used as an external cache. By way of example, but not limitation, many forms of RAM are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), and a Direct Rambus RAM (DRRAM). The memory 52 described in the embodiments of the present disclosure is intended to include, but is not limited to, these and any other suitable types of memory.

The methods disclosed in the embodiments of the present disclosure described above may be applied to the processor 51 or implemented by the processor 51. The processor 51 may be an integrated circuit chip with signal processing capabilities. In an implementation process, each step of the above method may be completed by using an integrated logic circuit of hardware in the processor 51 or one or more instructions in a software form. The processor 51 described above may be a general purpose processor, a DSP, or other programmable logic devices, discrete gates or transistor logic devices, discrete hardware components, etc. Various methods, steps, and logic block diagrams disclosed in the embodiments of the present disclosure may be implemented or executed by the processor 51. The general purpose processor may be a microprocessor or any conventional processor, etc. The steps of the method disclosed in combination with the embodiment of the present disclosure may be directly embodied as a hardware decoding processor for execution and completion, or a combination of hardware and software modules in the decoding processor for execution and completion. The software module may be located in a storage medium, which is located in the memory 52, and the processor 51 reads information in the memory 52, and completes the steps of the foregoing methods in combination with hardware.

In an exemplary embodiment, the device may be implemented by one or more Application Specific Integrated Circuits (ASICs), DSPs, Programmable Logic Devices (PLDs) , Complex Programmable Logic Devices (CPLDs), FPGAs, general purpose processors, controllers, MCUs, microprocessors, or other electronic components for implementing the foregoing methods.

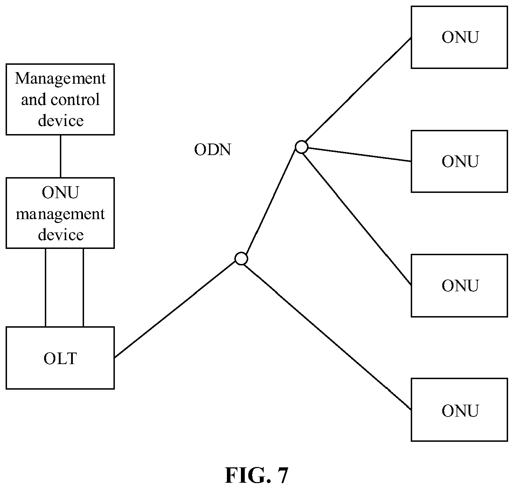

The embodiments of the present disclosure also provide a system for ONU management. FIG. 7 is a schematic structural diagram of a system for ONU management according to an embodiment of the present disclosure. As illustrated in FIG. 7, the system includes: an ONU management device, an OLT, and at least one ONU. The OLT and the at least one ONU are connected through an ODN.

The OLT is configured to send an ONU presence notification to the ONU management device when the ONU is determined to be online.

The ONU management device is configured to: generate a first command and a second command based on the ONU presence notification, where the second command carries a first specified identifier that is used to identify the ONU; send the first command to the OLT via a first interface; and generate a first management message according to the second command, and send the first management message to the ONU via a second interface, where the first management message is sent to the ONU via the OLT, and the first management message carries the first specified identifier.

The OLT is further configured to perform parameter configuration according to the first command.

The ONU management device may be configured to realize corresponding functions realized by the ONU management device in the methods, and the OLT may be configured to realize corresponding functions realized by the OLT in the methods. The descriptions thereof are omitted herein for the sake of brevity.

The embodiments of the present disclosure also provide a computer-readable storage medium having a computer program stored thereon. The computer program, when executed by a processor, causes the processor to perform the steps of the method of the embodiments of the present disclosure.

In some embodiments provided by the present disclosure, it should be understood that the disclosed device and method may be implemented in another manner. The device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part of all of the units may be selected according to a practical requirement to achieve the purposes of the solutions of the embodiments.

In addition, each functional unit in each embodiment of the present disclosure may be integrated into a processing unit, each unit may also serve as an independent unit and two or more than two units may also be integrated into a unit. The integrated unit may be implemented in a hardware form and may also be implemented in form of hardware and software functional unit.

Those of ordinary skill in the art can understand that all or part of the steps of the above method embodiments may be completed by a program used for instructing related hardware. The foregoing program may be stored in a computer-readable storage medium. When the program is executed, the steps of the above method embodiments are performed. The foregoing storage medium includes: various media capable of storing program codes such as a mobile storage device, a ROM, a RAM, a magnetic disk, or an optical disk.

Or, the integrated unit of the present disclosure may also be stored in a computer-readable storage medium if being implemented in the form of a software functional module and sold or used as a standalone product. Based on such an understanding, the technical solutions of the present disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the present disclosure. The foregoing storage medium includes: various media capable of storing program codes such as a mobile storage device, a ROM, a RAM, a magnetic disk, or an optical disk.

The above is only the specific implementation mode of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure should be subject to the scope of protection of the claims.

## Claims

1. A method for Optical Network Unit, ONU, management, performed by a device for ONU management, comprising:
generating (101) a first command and a second command when an ONU is determined to be online, wherein the second command carries a first identifier that is used to identify the ONU; and
sending (102) the first command to an Optical Line Terminal, OLT, via a first interface of the device for ONU management, wherein the first command is used to configure the OLT;
**characterized in that** the method further comprises:
generating (103) a first management message according to the second command, and sending the first management message to the ONU via a second interface of the device for ONU management, wherein the first management message is sent to the ONU via the OLT, and the first management message carries the first identifier.

2. The method of claim 1, wherein the ONU is determined to be online by:
receiving an ONU presence notification from the OLT via the first interface, wherein the ONU presence notification comprises an OLT identifier, an ONU identifier, and ONU positioning information; and
determining if the ONU has reached a presence state based on the ONU presence notification.

3. The method of claim 2, further comprising:
generating the first identifier based on the OLT identifier, the ONU identifier, and the ONU positioning information.

4. The method of claim 3, wherein generating the first command and the second command comprises:
generating the first command and the second command according to the ONU presence notification, wherein the second command carries the first identifier.

5. The method of claim 1, wherein generating the first management message according to the second command comprises:
obtaining at least one first management message corresponding to the second command, wherein the at least one first management message carries the first identifier; and
encapsulating the at least one first management message using a transfer protocol for the second interface.

6. The method of any one of claims 1 to 5, further comprising:
receiving an ONU operation command, wherein the ONU operation command carries a second identifier;
generating a third command carrying the second identifier according to the ONU operation command; and
generating a second management message according to the third command, and sending the second management message to an ONU corresponding to the second identifier via the second interface, wherein the second management message is sent to the ONU corresponding to the second identifier via the OLT, and the second management message carries the second identifier.

7. A device for Optical Network Unit, ONU, management, comprising:
a first processing unit (41), configured to generate a first command and a second command when an ONU is determined to be online, wherein the second command carries a first identifier that is used to identify the ONU;
**characterized in that** the device for ONU management further comprises:
a second processing unit (42), configured to generate a first management message according to the second command, wherein the first management message carries the first identifier;
a first communication unit (43), configured to send the first command generated by the first processing unit to an Optical Line Terminal, OLT, via a first interface of the device for ONU management, wherein the first command is used to configure the OLT; and
a second communication unit (44), configured to send the first management message generated by the second processing unit to the ONU via a second interface of the device for ONU management, wherein the first management message is sent to the ONU via the OLT.

8. The device of claim 7, wherein the first processing unit (41) is configured to receives an ONU presence notification from the OLT through the first communication unit via the first interface, and determine if the ONU has reached a presence state based on the ONU presence notification, wherein the ONU presence notification comprises an OLT identifier, an ONU identifier, and ONU positioning information.

9. The device of claim 8, wherein the first processing unit (41) is further configured to generate the first identifier based on the OLT identifier, the ONU identifier, and the ONU positioning information.

10. The device of claim 9, wherein the first processing unit (41) is configured to:
generate the first command and the second command according to the ONU presence notification, wherein the second command carries the first identifier.

11. The device of claim 7, wherein the second processing unit (42) is configured to:
obtain at least one first management message corresponding to the second command, wherein the at least one first management message carries the first identifier, and
encapsulate the at least one first management message using a transfer protocol for the second interface.

12. The device of any one of claims 7 to 11, further comprising:
a third communication unit (45), configured to receive an ONU operation command, wherein the ONU operation command carries a second identifier,
wherein the first processing unit (41) is further configured to generate a third command carrying the second identifier according to the ONU operation command;
the second processing unit (42) is further configured to generate a second management message according to the third command, wherein the second management message carries the second identifier; and
the second communication unit (44) is further configured to send the second management message generated by the second processing unit to an ONU corresponding to the second identifier via the second interface, wherein the second management message is sent to the ONU corresponding to the second identifier via the OLT.

13. A computer-readable storage medium having stored therein a computer program that, when executed by a processor of a device for Optical Network Unit, ONU, management of claim 7, causes the device for ONU management to perform the method of any one of claims 1 to 6.

## Patentansprüche

1. Verfahren für die Verwaltung einer optischen Netzwerkeinheit, ONU, das von einer Vorrichtung für die ONU-Verwaltung durchgeführt wird, umfassend:
Erzeugen (101) eines ersten Befehls und eines zweiten Befehls, wenn bestimmt wird, dass eine ONU online ist, wobei der zweite Befehl eine erste Kennung trägt, die zum Identifizieren der ONU verwendet wird; und
Senden (102) des ersten Befehls an ein optisches Leitungsterminal, OLT, über eine erste Schnittstelle der Vorrichtung für die ONU-Verwaltung, wobei der erste Befehl dazu verwendet wird, das OLT zu konfigurieren;
**dadurch gekennzeichnet, dass** das Verfahren ferner umfasst:
Erzeugen (103) einer ersten Verwaltungsnachricht gemäß dem zweiten Befehl und Senden der ersten Verwaltungsnachricht an die ONU über eine zweite Schnittstelle der Vorrichtung für die ONU-Verwaltung, wobei die erste Verwaltungsnachricht über das OLT an die ONU gesendet wird und die erste Verwaltungsnachricht die erste Kennung trägt.

2. Verfahren nach Anspruch 1, wobei bestimmt wird, dass die ONU online ist, durch:
Empfangen einer ONU-Präsenzbenachrichtigung von dem OLT über die erste Schnittstelle, wobei die ONU-Präsenzbenachrichtigung eine OLT-Kennung, eine ONU-Kennung und ONU-Positionsinformationen umfasst; und
Bestimmen auf Grundlage der ONU-Präsenzbenachrichtigung, ob die ONU einen Präsenzzustand erreicht hat.

3. Verfahren nach Anspruch 2, ferner umfassend:
Erzeugen der ersten Kennung auf Grundlage der OLT-Kennung, der ONU-Kennung und der ONU-Positionierungsinformationen.

4. Verfahren nach Anspruch 3, wobei das Erzeugen des ersten Befehls und des zweiten Befehls umfasst:
Erzeugen des ersten Befehls und des zweiten Befehls gemäß der ONU-Präsenzbenachrichtigung, wobei der zweite Befehl die erste Kennung trägt.

5. Verfahren nach Anspruch 1, wobei das Erzeugen der ersten Verwaltungsnachricht gemäß dem zweiten Befehl umfasst:
Erhalten wenigstens einer ersten Verwaltungsnachricht, die dem zweiten Befehl entspricht, wobei die wenigstens eine erste Verwaltungsnachricht die erste Kennung trägt; und
Einkapseln der wenigstens einen ersten Verwaltungsnachricht unter Verwendung eines Übertragungsprotokolls für die zweite Schnittstelle.

6. Verfahren nach einem der Ansprüche 1 bis 5, ferner umfassend:
Empfangen eines ONU-Betriebsbefehls, wobei der ONU-Betriebsbefehl eine zweite Kennung trägt;
Erzeugen eines dritten Befehls, der die zweite Kennung trägt, gemäß dem ONU-Betriebsbefehl; und
Erzeugen einer zweiten Verwaltungsnachricht gemäß dem dritten Befehl und Senden der zweiten Verwaltungsnachricht an eine ONU, die der zweiten Kennung entspricht, über die zweite Schnittstelle, wobei die zweite Verwaltungsnachricht über das OLT an die ONU, die der zweiten Kennung entspricht, gesendet wird und die zweite Verwaltungsnachricht die zweite Kennung trägt.

7. Vorrichtung für die Verwaltung von optischen Netzwerkeinheiten (ONU), umfassend:
eine erste Verarbeitungseinheit (41), die dazu konfiguriert ist, einen ersten Befehl und einen zweiten Befehl zu erzeugen, wenn bestimmt wird, dass eine ONU online ist, wobei der zweite Befehl eine erste Kennung trägt, die verwendet wird, um die ONU zu identifizieren;
**dadurch gekennzeichnet, dass** die Vorrichtung für die ONU-Verwaltung ferner umfasst:
eine zweite Verarbeitungseinheit (42), die dazu konfiguriert ist, eine erste Verwaltungsnachricht gemäß dem zweiten Befehl zu erzeugen, wobei die erste Verwaltungsnachricht die erste Kennung trägt;
eine erste Kommunikationseinheit (43), die dazu konfiguriert ist, den von der ersten Verarbeitungseinheit erzeugten ersten Befehl über eine erste Schnittstelle der Vorrichtung für die ONU-Verwaltung an ein optisches Leitungsterminal, OLT, zu senden, wobei der erste Befehl dazu verwendet wird, das OLT zu konfigurieren; und
eine zweite Kommunikationsvorrichtung (44), die dazu konfiguriert ist, die von der zweiten Verarbeitungseinheit erzeugte erste Verwaltungsnachricht über eine zweite Schnittstelle der Vorrichtung für die ONU-Verwaltung an die ONU zu senden, wobei die erste Verwaltungsnachricht über das OLT an die ONU gesendet wird.

8. Vorrichtung nach Anspruch 7, wobei die erste Verarbeitungseinheit (41) dazu konfiguriert ist, eine ONU-Präsenzbenachrichtigung von dem OLT über die erste Kommunikationseinheit über die erste Schnittstelle zu empfangen und auf Grundlage der ONU-Präsenzbenachrichtigung zu bestimmen, ob die ONU einen Präsenzzustand erreicht hat, wobei die ONU-Präsenzbenachrichtigung eine OLT-Kennung, eine ONU-Kennung und ONU-Positionsinformationen umfasst.

9. Vorrichtung nach Anspruch 8, wobei die erste Verarbeitungseinheit (41) ferner dazu konfiguriert ist, die erste Kennung auf Grundlage der OLT-Kennung, der ONU-Kennung und der ONU-Positionsinformationen zu erzeugen.

10. Vorrichtung nach Anspruch 9, wobei die erste Verarbeitungseinheit (41) konfiguriert ist zum:
Erzeugen des ersten Befehls und des zweiten Befehls gemäß der ONU-Präsenzbenachrichtigung, wobei der zweite Befehl die erste Kennung trägt.

11. Vorrichtung nach Anspruch 7, wobei die zweite Verarbeitungseinheit (42) konfiguriert ist, zum:
Erhalten wenigstens einer ersten Verwaltungsnachricht, die dem zweiten Befehl entspricht, wobei die wenigstens eine erste Verwaltungsnachricht die erste Kennung trägt, und
Einkapseln der wenigstens einen ersten Verwaltungsnachricht unter Verwendung eines Übertragungsprotokolls für die zweite Schnittstelle.

12. Vorrichtung nach einem der Ansprüche 7 bis 11, ferner umfassend:
eine dritte Kommunikationseinheit (45), die dazu konfiguriert ist, einen ONU-Vorgangsbefehl zu empfangen, wobei der ONU-Vorgangsbefehl eine zweite Kennung trägt,
wobei die erste Verarbeitungseinheit (41) ferner dazu konfiguriert ist, einen dritten Befehl gemäß dem ONU-Vorgangsbefehl zu erzeugen, der die zweite Kennung trägt;
die zweite Verarbeitungseinheit (42) ferner dazu konfiguriert ist, eine zweite Verwaltungsnachricht gemäß dem dritten Befehl zu erzeugen, wobei die zweite Verwaltungsnachricht die zweite Kennung trägt; und
die zweite Kommunikationseinheit (44) ferner dazu konfiguriert ist, die zweite Verwaltungsnachricht, die durch die zweite Verarbeitungseinheit erzeugt wurde, an eine ONU, die der zweiten Kennung entspricht, über die zweite Schnittstelle zu senden, wobei die zweite Verwaltungsnachricht an die ONU, die der zweiten Kennung entspricht, über das OLT gesendet wird.

13. Computerlesbares Speichermedium mit einem darauf gespeicherten Computerprogramm, das, wenn es durch einen Prozessor einer Vorrichtung für die Verwaltung von optischen Netzwerkeinheiten, ONU, nach Anspruch 7 ausgeführt wird, veranlasst, dass die Vorrichtung für die ONU-Verwaltung das Verfahren nach einem der Ansprüche 1 bis 6 durchführt.

## Revendications

1. Procédé de gestion d'unité de réseau optique, ONU, réalisé par un dispositif de gestion d'ONU, comprenant :
la génération (101) d'un premier ordre et d'un deuxième ordre lorsqu'il est déterminé qu'une ONU est en ligne, dans lequel le deuxième ordre porte un premier identifiant qui est utilisé pour identifier l'ONU ; et
l'envoi (102) du premier ordre à un terminal de ligne optique, OLT, par l'intermédiaire d'une première interface du dispositif de gestion d'ONU, dans lequel le premier ordre est utilisé pour configurer l'OLT ;
**caractérisé en ce que** le procédé comprend en outre :
la génération (103) d'un premier message de gestion selon le deuxième ordre, et l'envoi du premier message de gestion à l'ONU par l'intermédiaire d'une deuxième interface du dispositif de gestion d'ONU, dans lequel le premier message de gestion est envoyé à l'ONU par l'intermédiaire de l'OLT, et le premier message de gestion porte le premier identifiant.

2. Procédé selon la revendication 1, dans lequel il est déterminé que l'ONU est en ligne par :
la réception d'une notification de présence d'ONU à partir de l'OLT par l'intermédiaire de la première interface, dans lequel la notification de présence d'ONU comprend un identifiant d'OLT, un identifiant d'ONU, et des informations de positionnement d'ONU ; et
le fait de déterminer si l'ONU a atteint un état de présence sur la base de la notification de présence d'ONU.

3. Procédé selon la revendication 2, comprenant en outre :
la génération du premier identifiant sur la base de l'identifiant d'OLT, de l'identifiant d'ONU, et des informations de positionnement d'ONU.

4. Procédé selon la revendication 3, dans lequel la génération du premier ordre et du deuxième ordre comprend :
la génération du premier ordre et du deuxième ordre selon la notification de présence d'ONU, dans lequel le deuxième ordre porte le premier identifiant.

5. Procédé selon la revendication 1, dans lequel la génération du premier message de gestion selon le deuxième ordre comprend :
l'obtention d'au moins un premier message de gestion correspondant au deuxième ordre, dans lequel l'au moins un premier message de gestion porte le premier identifiant ; et
l'encapsulation de l'au moins un premier message de gestion à l'aide d'un protocole de transfert pour la deuxième interface.

6. Procédé selon l'une quelconque des revendications 1 à 5, comprenant en outre :
la réception d'un ordre de fonctionnement d'ONU, dans lequel l'ordre de fonctionnement d'ONU porte un deuxième identifiant ;
la génération d'un troisième ordre portant le deuxième identifiant selon l'ordre de fonctionnement d'ONU ; et
la génération d'un deuxième message de gestion selon le troisième ordre, et l'envoi du deuxième message de gestion à une ONU correspondant au deuxième identifiant par l'intermédiaire de la deuxième interface, dans lequel le deuxième message de gestion est envoyé à l'ONU correspondant au deuxième identifiant par l'intermédiaire de l'OLT, et le deuxième message de gestion porte le deuxième identifiant.

7. Dispositif de gestion d'unité de réseau optique, ONU, comprenant :
une première unité de traitement (41), configurée pour générer un premier ordre et un deuxième ordre lorsqu'il est déterminé qu'une ONU est en ligne, dans lequel le deuxième ordre porte un premier identifiant qui est utilisé pour identifier l'ONU ; et
**caractérisé en ce que** le dispositif de gestion d'ONU comprend en outre :
une deuxième unité de traitement (42), configurée pour générer un premier message de gestion selon le deuxième ordre, dans lequel le premier message de gestion porte le premier identifiant ;
une première unité de communication (43), configurée pour envoyer le premier ordre généré par la première unité de traitement à un terminal de ligne optique, OLT, par l'intermédiaire d'une première interface du dispositif de gestion d'ONU, dans lequel le premier ordre est utilisé pour configurer l'OLT ; et
une deuxième unité de communication (44), configurée pour envoyer le premier message de gestion généré par la deuxième unité de traitement à l'ONU par l'intermédiaire d'une deuxième interface du dispositif de gestion d'ONU, dans lequel le premier message de gestion est envoyé à l'ONU par l'intermédiaire de l'OLT.

8. Dispositif selon la revendication 7, dans lequel la première unité de traitement (41) est configurée pour recevoir une notification de présence d'ONU à partir de l'OLT par le biais de la première unité de communication par l'intermédiaire de la première interface, et pour déterminer si l'ONU a atteint un état de présence sur la base de la notification de présence d'ONU, dans lequel la notification de présence d'ONU comprend un identifiant d'OLT, un identifiant d'ONU, et des informations de positionnement d'ONU.

9. Dispositif selon la revendication 8, dans lequel la première unité de traitement (41) est en outre configurée pour générer le premier identifiant sur la base de l'identifiant d'OLT, de l'identifiant d'ONU, et des informations de positionnement d'ONU.

10. Dispositif selon la revendication 9, dans lequel la première unité de traitement (41) est configurée pour :
générer le premier ordre et le deuxième ordre selon la notification de présence d'ONU, dans lequel le deuxième ordre porte le premier identifiant.

11. Dispositif selon la revendication 7, dans lequel la deuxième unité de traitement (42) est configurée pour :
obtenir au moins un premier message de gestion correspondant au deuxième ordre, dans lequel l'au moins un premier message de gestion porte le premier identifiant, et
encapsuler l'au moins un premier message de gestion à l'aide d'un protocole de transfert pour la deuxième interface.

12. Dispositif selon l'une quelconque des revendications 7 à 11, comprenant en outre :
une troisième unité de communication (45), configurée pour recevoir un ordre de fonctionnement d'ONU, dans lequel l'ordre de fonctionnement d'ONU porte un deuxième identifiant,
dans lequel la première unité de traitement (41) est en outre configurée pour générer un troisième ordre portant le deuxième identifiant selon l'ordre de fonctionnement d'ONU ;
la deuxième unité de traitement (42) est en outre configurée pour générer un deuxième message de gestion selon le troisième ordre, dans lequel le deuxième message de gestion porte le deuxième identifiant ; et
la deuxième unité de communication (44) est en outre configurée pour envoyer le deuxième message de gestion généré par la deuxième unité de traitement à une ONU correspondant au deuxième identifiant par l'intermédiaire de la deuxième interface, dans lequel le deuxième message de gestion est envoyé à l'ONU correspondant au deuxième identifiant par l'intermédiaire de l'OLT.

13. Support de stockage lisible par ordinateur dans lequel est stocké un programme d'ordinateur qui, lorsqu'il est réalisé par un processeur d'un dispositif de gestion d'unité de réseau optique, ONU, de la revendication 7, amène le dispositif de gestion d'ONU à réaliser le procédé de l'une quelconque des revendications 1 à 6.
